# NEW EUROPEAN PATENT SPECIFICATION

(11) **EP 0 291 136 B2**
(45) Date of publication and mention of the opposition decision: **06.12.1995**
(45) Mention of the grant of the patent: 21.11.1991
(21) Application number: 88200954.1
(22) Date of filing: 11.05.1988
(51) Int. Cl.: B29C 47/00, F16L 25/00

(54) **Plastic tube with solid crossribs on the outer surface, a moulding device therefor; installation comprising such a device and a method for moulding a plastic tube**
Kunststoffrohr mit festen Querrippen auf der äusseren Oberfläche, Formvorrichtung, Anlage mit einer solchen Vorrichtung und Verfahren zum Formen eines Kunststoffrohres
Tube en matière plastique présentant des nervures transversales solides sur la surface extérieure, dispositif de moulage, installation comprenant un tel dispositif et méthode de moulage de ce tube

(30) Priority: 14.05.1987 NL 8701164
(43) Date of publication of application: 17.11.1988
(73) Proprietor: UPONOR N.V., Philipsburg Sint Maarten (AN)
(72) Inventor: Hansen, Finn Thor, DK-8600 Silkeborg (DK)
(74) Representative: Mathol, Heimen, Ir.

(56) References cited:
- EP-A- 0 001 482
- EP-A- 0 005 104
- EP-A- 0 108 598
- EP-A- 0 135 634
- EP-A- 0 211 428
- DE-A- 2 366 018
- DE-B- 2 709 395
- DE-U- 8 619 356
- FR-A- 2 285 981
- FR-A- 2 359 696
- US-A- 4 003 685
- US-A- 4 038 011
- US-A- 4 038 011
- PATENT ABSTRACTS OF JAPAN, vol. 10, no. 349 (M-538)[2405], 26th November 1986, page 53 M 538; & JP-A-61 148 035 (TAKIRON CO., LTD) 05-07-1986

## Description

Firstly the invention relates to a plastic tube with a smooth inner surface and an outer surface comprising cross-ribs. Such a tube is known from German Patent Specification 2,709,395. In said patent specification such a tube is described together with the moulding of such a tube. The tube described therein has a smooth inner surface and is provided with solid ribs on the outer surface over its entire length. Such a known tube which is provided with ribs over its entire outer surface has the disadvantage that connecting it to other similar sorts of pipes is relatively difficult. The usual widening, in normal smooth tubes, of one end in a manner such that the unwidened end of another tube fits therein has in practice hitherto not yielded satisfactory results in the case of tubes with solid ribs because the ribs are deformed during the widening operation which leads to uneven, non-round shapes which may be accompanied by a lesening of the mechanical strength.

The object of the present invention is to provide a tube provided with ribs with a smooth inner surface which is directly suitable for use in all known tube connection methods. Above object is reached with a tube of the indicated type and specified in the characterizing part of Claim 1.

In the above it is to be noted that the tube having a smooth inner surface and solid cross ribs on the outside is of completely solid material having no internal hollow sections or cavities.

By making at least one end of a tube according to the invention smooth and distributing at least part of the volume of the solid ribs normally present there equally over the wall thickness of the tube, a tube end is moulded on the one hand which is suitable for all normal joining methods while on the other hand said tube end may satisfy, in a simple manner, the required tolerances of roundness and strength.

In particular in a tube according to the invention the volume of plastic per length unit of the ribbed section is equal to the volume per length unit of the smooth section.

With regard to the invention reference is made to US-A-4038011.

In said publication an apparatus is described for forming a tube having ribbed and unribbed sections.

The ribbed sections are formed by the action of dies which temporarily advance against the outer stratum of an extruded tube while it is supported on a mandrel.

Such tube has as a disadvantage that the ribbed and unribbed sections are not well olefined as no calibration during cooling has been carried out.

A tube produced in the known appartus differs therefore essentially from the well defined tube according to the invention. With regard to the invention reference is made to Patent Abstracts of Japan, volume 10, no. 349 (M-538) (2405), 26th November 1986. Said publication describes a tube having a smooth inner surface and a outer surface having cross ribs. However the tube described is a double walled tube which is formed by extruding two layers of resin in which an outer layer is blow moulded to follow the cavities of series of half moulds and the inner layer is applied to the so formed corrugated outer layer and adhered by melting to said outer layer. The tube formed in this way does not have solid cross ribs but has crops ribs which comprise a cavity inside. The present invention however does concern a tube having a smooth inner surface and an outer surface having solid cross ribs wherein in the body of the tube and the cross ribs solid material is present and which comprise no cavities.

In EP-A-0211428 is described that it is known to join to corrugated plastic pipe sections with one end of one pipe section having an enlarged bell portion to receive the corrugated end of a second pipe section. Said publication concerns also corrugated pipe in which a tube has a smooth inside wall which is fused to a corrugated outside wall whereby the tube has an enlarged bell or enlarged end. Also this publication does not concern a tube having a smooth inner surface and an outer surface having solid cross ribs wherein the tube is of homogeneous solid material and does not comprise cavities ; the cited publication does also not concern such a pipe of solid material having an end section with both a smooth inner surface and a smooth outer surface.

FR-2285981 concerns a tube of solid material having a smooth outer surface and having a varying wall thickness. The variation of wall thickness is reached by varying the speed of extraction of the solidified tube leading to a high wall thickness at low speed of extraction and a small wall thickness at higher speed of extraction. The cited French publication does not concern the formation of a tube having a smooth inner surface and solid cross ribs of identical form at the outside and having tube sections which comprise both a smooth inner surface and a smooth outer surface.

US-A-4033685 concerns a device for blow moulding of pipe in which an extruded foil is laid against the ribs of a series of ribbed half moulds with the use of a compressed medium after which the blow moulding process is finished with use of mechanical means.

The formation of a tube with use of extrusion and in which the cavities of a series of half moulds are completely filled with resin for the formation of a tube having a smooth inner surface and having a tube section with a smooth inner surface and a smooth outer surface is not described.

The transition section between the ribbed section of a tube and the smooth section of a tube is generally not sharp, but the transition section will have an incline ; said incline is generally between 0 and 90°.

In the case of many types of tube connection it is usual to widen one end of the tube in a manner such that an unwidened end of another tube may be suitably received therein ; as a rule, use is made of sealing means which are appropriate for this purpose. The tube according to the invention may then, at its smooth end, be widened in a manner such that an end comprising solid ribs of another tube may be received; the widening may also be produced in a manner such that an unwidened smooth end of another tube may be received. In the latter case, the tube according to the invention will have a smooth outer surface at both ends ; one of the two ends will then be widened in a manner such that a smooth end of another tube may be received.

The invention also relates to a rib-shaped device for use in an installation for moulding a tube comprising ribs according to the invention as described above, which device comprises at least two series of half-moulds ; each half-mould having a half-tube-shaped moulding cavity, and the half-moulds being moveable along tracks, which tracks run parallel to each other over a working path in a manner such that, over said working path, the half-moulds complement each other, during moulding, to an annular mould around a concentrically arranged smooth mandrel. The device according to the invention being characterized in that at least one pair of all pairs of half-moulds is present, at least a section of which has a smooth inner surface, whilst the half-moulds in the remaining pairs have a ribbed inner surface.

For such a device according to the invention it is, furthermore, the case that, in particular, at least one of all pairs of half-moulds is present, at least a section of which has the smooth profile which is not parallel to the surface of the above mentioned smooth mandrel ; said section has, at least partially, an incline of between 0 and 90° with respect to the central axis of the device.

The sum of the length of all half moulds with a smooth inner surface which is parallel to that of the smooth mandrel is essentially equal to the desired length of the surface of a tube with a smooth outer surface.

In particular, in the device according to the invention, the volume ratio per length unit of the moulding cavity of the half moulds with a ribbed inner surface around the mandrel to the moulding cavity of the half moulds with a smooth inner surface around the mandrel has a value in the region of 0.5-1.4 ; in many cases, said volume ratio is essentially equal to 1.0.

The invention also relates to an installation comprising an extruder and a rib moulding device as described above.

Finally, the invention relates to a method for producing a tube made from plastic with a smooth inner surface and an outer surface comprising solid cross-ribs using in an installation according to the invention as has been described above which is characterized in that the extrusion speed and the speed of displacement of the half-moulds of the invention are adjusted in relation to the desired ratio of the volume of plastic per unit length of a tube section with ribs and a tube section with a smooth outer surface and, similarly, the desired ratio of the displacement speed of the half-moulds is adjusted to a value in the region of approximately 0.5 to 1.4 times the extrusion speed.

If the ratio differs from 1.0, a constant speed difference is maintained over a period of time which is essentially equal to and coincides with the time that is necessary to permit formation, around a smooth mandrel, of the number of moulds having a smooth inner surface, which is required for the corresponding smooth section of a tube.

The invention will now be described with reference to the drawing, in which :
Figure 1 shows a tube according to the invention in cross-section, with a smooth outer surface at one end ;
Figure 2 shows two tubes according to the invention connected together ;
Figure 3 shows a tube provided with solid ribs, a central section having a smooth outer surface ;
Figure 4 shows an installation for moulding a tube provided with ribs ;
Figure 5 shows in plan view a section through a number of half-moulds of a device according to the invention.

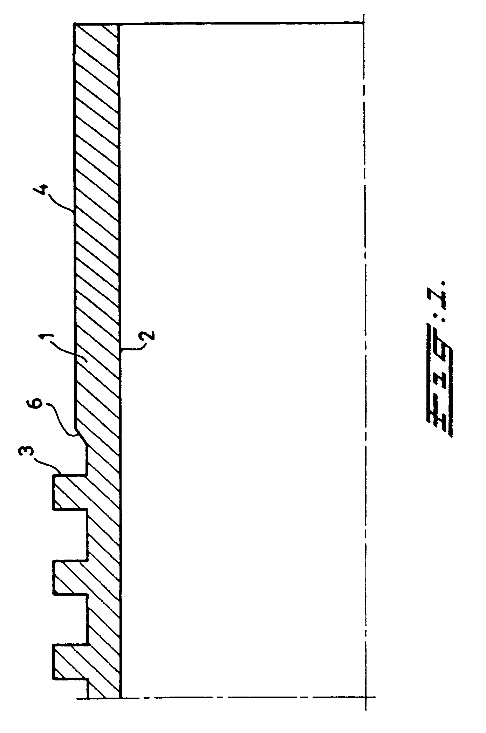

Figure 1 shows a tube 1 with a smooth inner wall 2 and solid ribs 3 on the outer side. One end of the tube has a smooth outer side 4 while the transition section between the smooth section 4 and the section where the ribs 3 are located is indicated by 6.

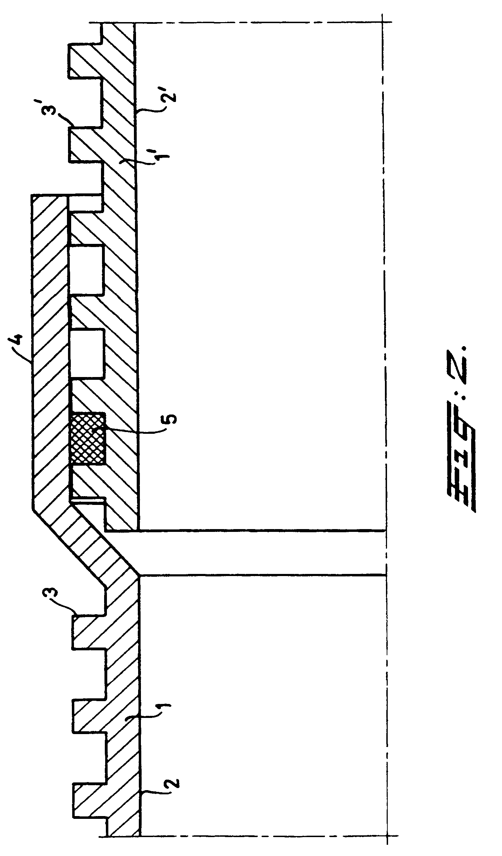

Figure 2 shows two ribbed tubes connected together, 1 and 1', the smooth section 4 is widened in order to receive the section of the tube 1' provided with ribs ; 5 shows that a packing material may be located between the ribs.

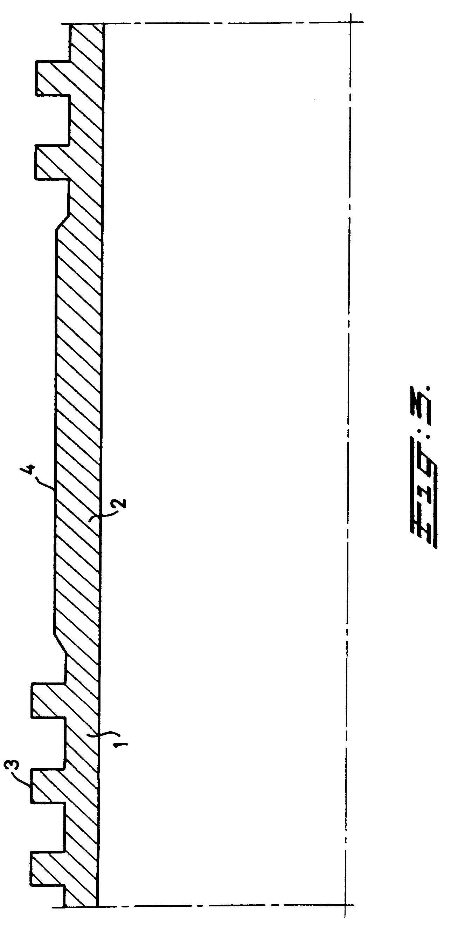

Figure 3 shows a section of a continuously moulded ribbed tube in which a section of the length has a smooth outer surface 4. In order to obtain tubes with a smooth outer surface at both ends the section 4 in the centre may be sawn through ; if a smooth outer surface is required at only one end, sawing through may take place at one of the ends of said smooth section 4.

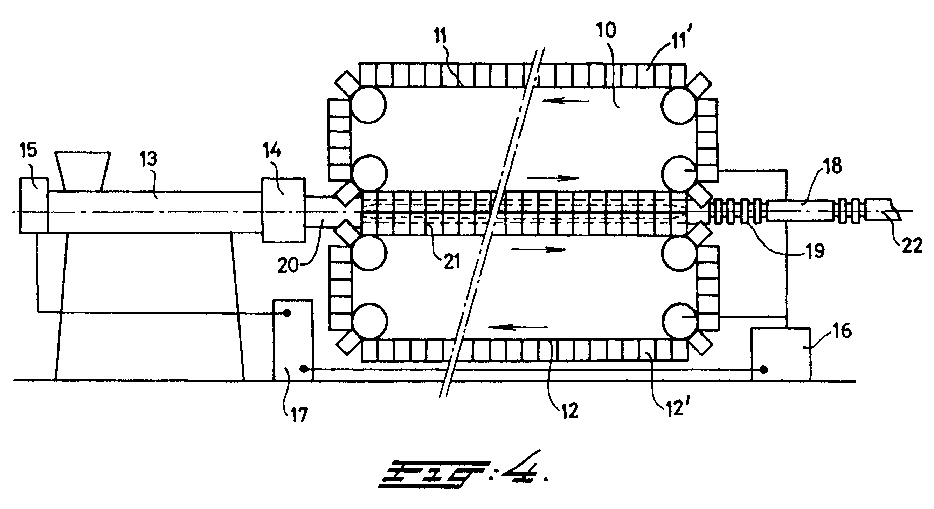

Figure 4 shows diagrammatically a device for the continuous moulding of rib tubes comprising a rib moulding device 10 and extruder 13.

The rib moulding device comprises two endless belts 11 and 12 on which half-moulds 11' and 12' are mounted. The half-moulds lock together around the smooth end of an extrusion die ring 20 during moulding of an annular hollow form.

The tube 22 delivered by the extrusion head 14 at the extrusion die ring 20 has an internal diameter which is smaller than the external diameter of the smooth mandrel 21. The half-moulds 11' and 12' deform the still plastic material, for example polyvinyl chloride, of the tube 22 and give the outer surface of the tube its profile.

The moulds provided with a ribbed inner surface give a ribbed tube section 19. The moulds with a smooth inner surface lead to a smooth tube section 18. In all cases, the inner wall of the moulded tube is smooth.

The extruder 13 is driven by a drive means 15; the rib moulding device is, as shown diagrammatically, driven by drive means 16. The two drive means are coupled via a control unit 17 which regulates extrusion speed and transport speed of the half-moulds in accordance with a desired ratio of the volume of plastic per length unit of a ribbed tube section and a smooth tube section.

The device sketched in Figure 4 shows a single extrusion head to which all necessary plastic is supplied in one delivery.

Of course, with the aid of co-extrusion, the required plastic may be supplied in several streams to a special extrusion head connected to the rib moulding device, in which case the tube is constructed in stages.

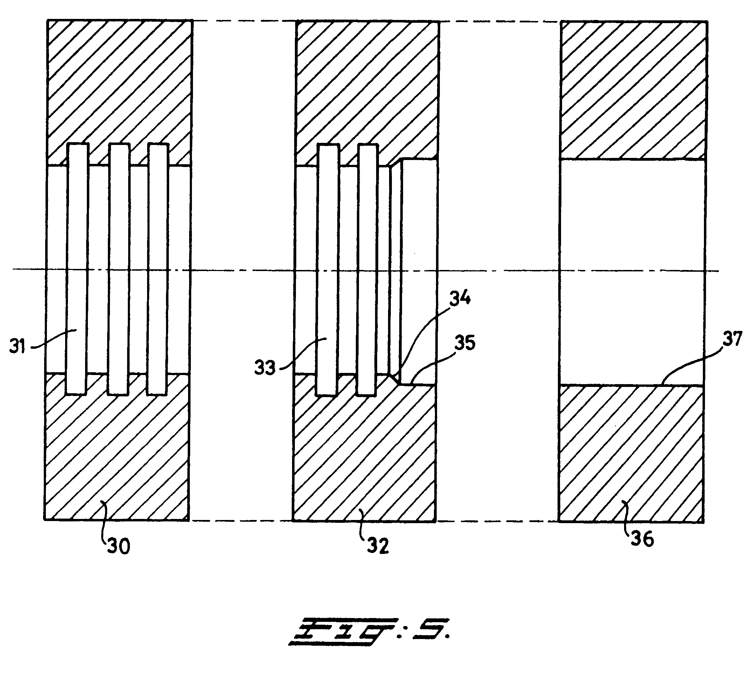

Finally, Figure 5 shows three cross-sections of moulds in plan view ; mould 30 is a normal mould with ribs 31.

Mould 32 is a mould with a ribbed section 33 and a smooth section 35 ; the transition section 34 has an incline.

Mould 36 has a smooth inner surface 37.

The invention will now be further illustrated with an example. A tube with an internal diameter of 180 mm with a wall thickness between the ribs of 2.0 mm is moulded in an installation according to the invention. The height of the ribs is 7.8 mm, the width of the ribs is 2.55 mm and the pitch of the ribs is 16.9 mm. The surface of the cross-section of the tube is, on average, 1785 mm².

The smooth end should have a wall thickness of 3.7 mm which corresponds with a cross-section of 2134 mm².

This may be achieved by changing the ration of the speeds of extrusion and transport of the half-moulds from 1 : 1 to 1 : 0.85 when the half-moulds with smooth inner surface pass through the zone in which the mouthpiece of the extruder supplies a tube.

As soon as the last mould with smooth inner surface has been completed, the speed ratio may be retumed to 1 : 1.

Throughout the description and following claims the term section means to indicate a length of tube forming a part of the total length of a tube.

## Claims

1. Tube made of plastic with a smooth inner surface (2) and an outer surface comprising solid cross-ribs (3), characterized in that the distance of the cross-ribs (3) measured from the root of one cross-rib (3) to the root of the next cross-rib (3) is larger than the thickness of a cross-rib (3) and that at least one end of said tube (1) has a smooth outer surface (4) of predetermined length, wherein for a certain tube (1) the ratio of the volume of plastic per unit of length of a tube section which has solid cross-ribs (3) to the volume per unit of a tube section which has a smooth outer surface (4) lies in the region of 0.5 - 1.4.

2. Tube according to Claim 1, characterized in that said ratio is essentially 1.0.

3. Tube according to one or more of Claims 1 - 2 characterized in that the incline in the transition section (6) between the section of a tube (1) comprising ribs (3) and a smooth end (4) of the same pipe lies between 0 and 90°.

4. Tube according to Claims 1 to 3 , characterized in that the end of the tube (1) comprising a smooth outer surface (4) is evenly widened in order to be able to receive an end comprising ribs (3) of another identical tube (1').

5. Tube according to Claims 1 - 4, characterized in that the end of the tube (1) comprising a smooth outer surface (4) is evenly widened in order to be able to receive an end with a smooth outer surface in an unwidened state of another identical tube (1').

6. Device (10) for use in an installation for moulding a tube comprising ribs according to one or more of Claims 1 to 5, said device 10 comprising at least two series of half-moulds (11, 12;) 11', 12'), each half-mould having a half-tube-shaped hollow form, and the half-moulds being moveable along tracks, which tracks run parallel to each other over a working path in a manner such that, over said working path, the half-moulds complement each other with forming of an annular mould around a concentrically arranged smooth mandrel (21), characterized in that at least one pair (36) of all pairs of half-moulds has a cavity with at least a partially smooth inner surface (37) whilst the half-moulds of the remaining pairs (30) have a ribbed inner surface (31), wherein the ratio of the volume per unit of length inside a moulding cavity of a pair of half-moulds (30) locked around the smooth mandrel (21) which correspond to a tube section which has an outer surface comprising ribs to the total volume per unit of length inside a moulding cavity of a pair of half-moulds (36) locked around the smooth mandrel (21) corresponding with a tube section of the same tube which has a smooth outer surface lies in the region of 0.5 to 1.4.

7. Device according to Claim 6, characterized in that the volume ratio is essentially 1.0.

8. Device according to Claim 6, characterized in that at least one pair (32) of all pairs of half-moulds has at least a partially smooth inner surface (34) which is not parallel to the surface of said smooth mandrel (21); whilst said surface has at least partially an incline of between 0 and 90° with respect to the central axis of the device.

9. Installation for moulding a tube comprising ribs formed by at least one extruder (13) with an annular manifold and a rib moulding device (10) for use in such installation comprising at least two series of half-moulds ((11, 12; 11', 12'), each half-mould having a half-tube-shaped moulding cavity, and the half-moulds being moveable along tracks, which tracks run parallel to each other over a working path in a manner such that, over said working path, the half-moulds complement each other during forming of an annular mould around a concentrically arranged smooth mandrel (21), said extruder providing a plastic tube, the internal diameter of which is smaller than the external diameter of said mandrel (21), characterized in that the rib moulding device (10) for use in said installation is a device according to one or more of Claims 6-8.

10. Method for producing a tube made from plastic with a smooth inner surface and an outer surface which has solid cross-ribs in an installation according to Claim 9, characterized in that the extrusion speed and the speed of movement of the half-moulds (11, 12, 11', 12') are adjusted in relation to the desired ratio of the volume of plastic per unit length of a section (19) of a tube (22) with an outer surface provided with solid cross-ribs to the volume of plastic per unit of length of a section (18) of the same tube (22) which is provided with a smooth outer surface, wherein if said ratio differs from 1, a constant speed difference is maintained during a period of time which is essentially equal to and coincides with the time period which is necessary to permit forming of the continuous length of the annular mould which has a moulding cavity with a smooth profile.

11. Method according to Claim 10, characterized in that, accordingly, the desired ratio of the speed of the half-moulds (11, 12, 11', 12') is adjusted to a value in the region of approximately 0.5 to 1.4 times the extrusion speed.

## Patentansprüche

1. Rohr aus Kunststoff mit einer glatten inneren Oberfläche (2) und einer äußeren Oberfläche mit massiven Querrippen (3), dadurch gekennzeichnet, daß der Abstand der Querrippen (3), gemessen von der Wurzel einer Querrippe (3) zur Wurzel der nächsten Querrippe (3), größer ist als die Dicke einer Querrippe (3) und daß zumindest ein Ende des Rohres (1) eine glatte äußere Oberfläche (4) von vorbestimmter Länge aufweist, wobei für ein bestimmtes Rohr (1) das Verhältnis des Kunststoffvolumens pro Längeneinheit eines Rohrabschnitts, der massive Querrippen (3) aufweist, zu dem Volumen pro Einheit eines Rohrabschnitts, der eine glatte äußere Oberfläche (4) aufweist, im Bereich von 0,5 bis 1,4 liegt.

2. Rohr nach Anspruch 1, dadurch gekennzeichnet, daß das Verhältnis im wesentlichen 1,0 beträgt.

3. Rohr nach einem oder mehreren der Ansprüche 1 bis 2, dadurch gekennzeichnet, daß die Neigung im Übergangsabschnitt (6) zwischen dem Rippen (3) umfassenden Abschnitt eines Rohres (1) und einem glatten Ende (4) desselben Rohres zwischen 0 und 90° liegt.

4. Rohr nach den Ansprüchen 1 bis 3, dadurch gekennzeichnet, daß das eine glatte äußere Oberfläche (4) aufweisende Ende des Rohres (1) gleichmäßig erweitert ist, um zur Aufnahme eines Rippen (3) aufweisenden Endes eines anderen gleichen Rohres (1') in der Lage zu sein.

5. Rohr nach den Ansprüchen 1 bis 4, dadurch gekennzeichnet, daß das eine glatte äußere Oberfläche (4) aufweisende Ende des Rohres (1) gleichmäßig erweitert ist, um zur Aufnahme eines Endes mit einer glatten äußeren Oberfläche in einem unaufgeweiteten Zustand eines anderen gleichen Rohres (1') in der Lage zu sein.

6. Vorrichtung (10) zur Verwendung in einer Anlage zum Formen eines Rohres mit Rippen nach einem oder mehreren der Ansprüche 1 bis 5, wobei die Vorrichtung (10) aus zumindest zwei Serien von Halbformen (11,12;11',12') besteht, jede Halbform eine halbrohrförmige Hohlform besitzt und die Halbformen entlang Bahnen bewegbar sind, welche Bahnen auf einer Arbeitsstrecke parallel zueinander laufen, derart, daß die Halbformen auf der Arbeitsstrecke einander unter Bildung einer Ringform um einen konzentrisch angeordneten glatten Dorn (21) ergänzen, dadurch gekennzeichnet, daß zumindest ein Paar (36) sämtlicher Paare von Halbformen einen Hohlraum mit zumindest einer teilweise glatten inneren Oberfläche (37) aufweist, während die Halbformen der verbleibenden Paare (30) eine gerippte innere Oberfläche (31) aufweisen, wobei das Verhältnis des Volumens pro Längeneinheit im Inneren eines Formraums eines Paars von um den glatten Dorn (21) geschlossenen Halbformen (30), die einem Rohrabschnitt entsprechen, der eine äußere Oberfläche mit Rippen besitzt, zum Gesamtvolumen pro Längeneinheit im Inneren eines Formraums eines Paares von um den glatten Dorn (21) geschlossenen Halbformen (36) entsprechend einem Rohrabschnitt des gleichen Rohres, das eine glatte äußere Oberfläche besitzt, im Bereich von 0,5 bis 1,4 liegt.

7. Vorrichtung nach Anspruch 6, dadurch gekennzeichnet, daß das Volumenverhältnis im wesentlichen 1,0 beträgt.

8. Vorrichtung nach Anspruch 6, dadurch gekennzeichnet, daß zumindest ein Paar (32) sämtlicher Paare von Halbformen zumindest eine teilweise glatte innere Oberfläche (34) besitzt, die nicht parallel zur Oberfläche des glatten Dorns (21) verläuft, wobei diese Oberfläche zumindest teilweise eine Neigung zwischen 0 und 90° in bezug auf die Mittelachse der Vorrichtung aufweist.

9. Anlage zur Formung eines Rohres mit Rippen, hergestellt von zumindest einem Extruder (13) mit einem ringförmigen Verteiler und einer Rippenformvorrichtung (10) zur Verwendung in einer derartigen Anlage, bestehend aus zumindest zwei Serien von Halbformen (11,12;11'12'), wobei jede Halbform einen halbrohrförmigen Formraum aufweist und die Halbformen entlang Bahnen bewegar sind, welche Bahnen parallel zueinander auf einer Arbeitsstrecke laufen, derart, daß die Halbformen auf der Arbeitsstrecke einander unter Bildung einer Ringform um einen konzentrisch angeordneten glatten Dorn (21) ergänzen, und der Extruder ein Kunststoffrohr liefert, dessen Innendurchmesser kleiner ist als der Außendurchmesser des Dorns (21), dadurch gekennzeichnet, daß die Rippenformvorrichtung (10) zur Verwendung in dieser Anlage eine Vorrichtung nach einem oder mehreren der Ansprüche 6 bis 8 ist.

10. Verfahren zur Herstellung eines Rohres aus Kunststoff mit einer glatten inneren Oberfläche und einer äußeren Oberfläche, die massive Querrippen besitzt, in einer Anlage nach Anspruch 9, dadurch gekennzeichnet, daß die Extrusionsgeschwindigkeit und die Bewegungsgeschwindigkeit der Halbformen (11,12;11',12') in bezug auf das gewünschte Verhältnis des Kunststoffvolumens pro Längeneinheit eines Abschnitts (19) eines Rohres (22) mit einer mit massiven Querrippen versehenen äußeren Oberfläche zum Kunststoffvolumen pro Längeneinheit eines Abschnitts (18) des gleichen Rohres (22), der mit einer glatten äußeren Oberfläche versehen ist, eingestellt werden, wobei, falls das Verhältnis von 1 abweicht, eine konstante Geschwindigkeitsdifferenz während eines Zeitraums aufrechterhalten wird, der im wesentlichen gleich der Zeitspanne ist und mit der Zeitspanne zusammenfällt, die nötig ist, um die Formung der fortlaufenden Länge der Ringform zuzulassen, die einen Formraum mit einem glatten Profil besitzt.

11. Verfahren nach Anspruch 10, dadurch gekennzeichnet, daß entsprechend das gewünschte Verhältnis der Geschwindigkeit der Halbformen (11,12;11',12') auf einen Wert im Bereich von etwa dem 0,5- bis 1,4-fachen der Extrusionsgeschwindigkeit eingestellt wird.

## Revendications

1. Tube fait d'une matière plastique, présentant une surface intérieure lisse (2) et une surface extérieure comportant des nervures transversales pleines (3), caractérisé en ce que l'écartement des nervures transversales (3) mesuré de la base de l'une des nervures transversales (3) à la base de la nervure transversale (3) suivante est supérieur à l'épaisseur d'une nervure transversale (3) et en ce que l'une au moins des extrémités dudit tube (1) présente une surface extérieure lisse (4) d'une longueur prédéterminée, le rapport du volume de matière plastique par unité de longueur d'une section de tube comportant des nervures transversales pleines (3) sur le volume par unité de longueur d'une section de tube présentant une surface extérieure lisse (4), se situant, pour un tube (1) donné, dans la plage de O,5 à 1,4.

2. Tube selon la revendication 1, caractérisé en ce que ledit rapport est sensiblement égal à 1.

3. Tube selon l'une au moins des revendications 1 et 2, caractérisé en ce que l'inclinaison présente dans la section de transition (6) entre la section d'un tube (1) qui comporte des nervures (3) et une extrémité lisse (4) du même tube, se situe entre O et 9O°.

4. Tube selon les revendications 1 à 3, caractérisé en ce que l'extrémité du tube (1), qui présente une surface extérieure lisse (4) est élargie d'une manière uniforme, afin de pouvoir recevoir une extrémité comportant des nervures (3) d'un autre tube identique (1').

5. Tube selon les revendications 1 à 4, caractérisé en ce que l'extrémité du tube (1), qui présente une surface extérieure lisse (4) est élargie d'une manière uniforme afin de pouvoir recevoir, dans un état non élargi, une extrémité présentant une surface extérieure lisse, d'un autre tube identique (1').

6. Dispositif (1O) destiné à être utilisé dans une installation pour mouler un tube comportant des nervures, selon l'une au moins des revendications 1 à 5, ledit dispositif (10) comportant au moins deux séries de demi-moules (11, 12; 11', 12') dont chacun possède une configuration creuse en forme de demi-tube et qui sont mobiles le long de chemins qui s'étendent parallèlement l'un à l'autre sur toute la longueur d'une trajectoire de travail de telle manière que, sur toute la longueur de ladite trajectoire de travail, les demi-moules se complètent mutuellement en formant un moule annulaire autour d'un mandrin lisse (21) disposé concentriquement, caractérisé en ce que l'une (36) au moins de l'ensemble des paires de demi-moules comporte une cavité présentant au moins une surface intérieure partiellement lisse (37), tandis que les demi-moules des paires restantes (3O) présentent une surface intérieure nervurée (31), le rapport du volume par unité de longueur à l'intérieur d'une cavité de moulage d'une paire de demi-moules (3O) fermée autour du mandrin lisse (21) et correspondant à une section de tube qui présente une surface extérieure comportant des nervures, sur le volume total par unité de longueur à l'intérieur d'une cavité de moulage d'une paire de demi-moules (36) fermée autour du mandrin lisse (21) et correspondant à une section du même tube, qui présente une surface extérieure lisse, se situant dans la plage de O,5 à 1,4.

7. Dispositif selon la revendication 6, caractérisé en ce que le rapport de volume est sensiblement égal à 1.

8. Dispositif selon la revendication 6, caractérisé en ce que l'une (32) au moins de l'ensemble des paires de demi-moules présente au moins une surface intérieure partiellement lisse (34) non parallèle à la surface dudit mandrin lisse (21); tandis que ladite surface présente, au moins partiellement, une inclinaison qui se situe entre O et 9O° par rapport à l'axe médian du dispositif.

9. Installation pour mouler un tube comportant des nervures, constituée d'au moins une extrudeuse (13) pourvue d'une tubulure annulaire, et d'un dispositif de moulage de nervures (1O) destiné à être utilisé dans cette installation et comportant au moins deux séries de demi-moules (11, 12; 11', 12') dont chacun possède une cavité de moulage en forme de demi-tube et qui sont mobiles le long de chemins qui s'étendent parallèlement l'un à l'autre sur toute la longueur d'une trajectoire de travail de telle manière que, sur toute la longueur de ladite trajectoire de travail, les demi-moules se complètent mutuellement en formant un moule annulaire autour d'un mandrin lisse (21) disposé concentriquement, ladite extrudeuse délivrant un tube en matière plastique dont le diamètre intérieur est inférieur au diamètre extérieur dudit mandrin (21), caractérisée en ce que le dispositif de moulage de nervures (1O) destiné à être utilisé dans ladite installation est un dispositif selon l'une au moins des revendications 6 à 8.

10. Méthode pour produire un tube fait d'une matière plastique, présentant une surface intérieure lisse et une surface extérieure comportant des nervures transversales pleines, dans une installation selon la revendication 9, caractérisée en ce que la vitesse d'extrusion et la vitesse de déplacement des demi-moules (11, 12, 11', 12') sont ajustées en fonction du rapport voulu du volume de matière plastique par unité de longueur d'une section (18) d'un tube (22), présentant une surface extérieure pourvue de nervures transversales pleines, sur le volume de matière plastique par unité de longueur d'une section (18) du même tube (22), pourvue d'une surface extérieure lisse, étant précisé que si ledit rapport est différent de 1, une différence de vitesse constante est maintenue pendant une période de temps sensiblement égale et correspondant à la période de temps nécessaire pour permettre de former la longueur continue du moule annulaire comportant une cavité de moulage qui présente un profil lisse.

11. Méthode selon la revendication 1O, caractérisée en ce qu'en conséquence, le rapport voulu de la vitesse des demi-moules (11, 12, 11', 12') est ajusté à une valeur de l'ordre approximativement de O,5 à 1,4 fois la vitesse d'extrusion.
